# EUROPÄISCHE PATENTSCHRIFT

(11) **EP 0 478 565 B1**
(45) Veröffentlichungstag und Bekanntmachung des Hinweises auf die Patenterteilung: **10.08.1994**
(21) Anmeldenummer: 90906891.8
(22) Anmeldetag: 17.05.1990
(51) Int. Cl.: F15C 5/00

(54) **MIKROVENTIL**
MICROVALVE
MICRO-SOUPAPE

(30) Priorität: 19.06.1989 DE 3919876
(43) Veröffentlichungstag der Anmeldung: 08.04.1992
(73) Patentinhaber: ROBERT BOSCH GMBH, 70442 Stuttgart (DE)
(72) Erfinder: ENGELSDORF, Kurt, D-7122 Besigheim 3 (DE); METTNER, Michael, D-7140 Ludwigsburg (DE)
(86) Internationale Anmeldenummer: DE9000366
(87) Internationale Veröffentlichungsnummer: WO9015933

(56) Entgegenhaltungen:
- US-A- 4 826 131

## Beschreibung

### Stand der Technik

Die Erfindung geht aus von einem Mikroventil nach der im Oberbegriff des Anspruchs 1 näher angegebenen Gattung.

Es ist schon ein gattungsbildendes Mikroventil in Mehrschichtenstruktur aus der US-A-4 826 131 bekannt, bei dem das Schließglied mit einer Membran fest verbunden ist und letztere ebenso wie der Ventilsitz durch flächige Strukturierung von Materialschichten hergestellt sind. Dabei ist der druckbeaufschlagten Membran eine entgegenwirkende Druckausgleichsfläche zugeordnet. Bei dieser Mehrschichtenstruktur ist nun der Ventilsitz auf der Innenseite einer Deckschicht angeordnet, die mit einer angrenzenden Zwischenschicht einen Raum bildet, der mit einem Zulauf- und einem Auslaß-Anschluß in Verbindung steht. Die Membran selbst ist hierbei in die Zwischenschicht integriert, welche mit einer Trägerschicht eine zusätzliche Kammer begrenzt` die über eine Öffnung im Schließglied mit dem Raum bzw. dem Zulauf-Anschluß Verbindung haben kann. Bei geöffnetem Mikroventil ist dadurch ein statisch voller Druckausgleich am Schließglied möglich; dagegen tritt bei geschlossenem Mikroventil ein druckunausgeglichener Zustand auf, wobei in der Kammer eine erheblich größere Fläche einseitig mit Zulaufdruck beaufschlagt wird; das Mikroventil eignet sich daher nur für relativ kleine Drücke und geringe Schaltleistungen. Der fehlende Druckausgleich führt ferner zu relativ großen Stellkräften für das Schließglied und damit zu aufwendigen Betätigungseinrichtungen.

Ferner erfordert diese Bauweise neben dem druckmitteldurchströmten Raum eine druckbeaufschlagbare Kammer sowie eine Öffnung im Schließglied, was zu einer aufwendigen Bauweise des Mikroventils führt.

Ferner ist ein Mikroventil aus der GB 21 55 152 A bekannt, das in der aus der Halbleitertechnik bekannten Mehrschichtenstruktur hergestellt ist. Dieses mikromechanische Ventil weist im wesentlichen drei Schichten auf, von denen in einer Trägerschicht aus Silizium ein Einlaß und ein Auslaß sowie ein Ventilsitz ausgebildet sind und an diese Trägerschicht eine Zwischenschicht sowie an letztere eine äußere Deckschicht anschließen, wobei diese Schichten einen die Druckmittelverbindung zwischen den beiden Anschlüssen herstellenden Raum formen. Bei diesem Mikroventil ist die Deckschicht zugleich als Membran ausgebildet, in die auch ein dem Ventilsitz zugeordnetes Schließglied integriert ist. Beim Betrieb dieses Mikroventils muß eine auf der Membran angeordnete elektrostatische Betätigungseinrichtung nicht nur die Kräfte der federnden Membran überwinden, sondern auch den im Eingang anstehenden Druck des Fluids, da die den Ventilsitz schließende Membran diesem Druck gegenüber unausgeglichen ist. Dies führt dazu, daß sich das Mikroventil nur für relativ kleine Drücke eignet und somit eine relativ geringe hydraulische Schaltleistung erbringt. Auch das dynamische Verhalten des mikromechanischen Ventils wird dadurch nachteilig beeinflußt. Die druckunausgeglichene Bauweise des Mikroventils führt zudem zu relativ großen Stellkräften und damit zu relativ aufwendigen Betätigungseinrichtungen.

Ferner wird auf die Druckschriften EP 0 250 948 A2 und EP 0 261 972 A2 hingewiesen, in denen die Technologie zur Herstellung solcher Mikroventile genauer beschrieben ist und dargelegt wird, wie in Mehrschichtenstrukturen dreidimensionale Formen herausgearbeitet werden können, so daß durch Kombination verschiedener Strukturdetails unterschiedliche mechanische Elemente möglich sind. Dadurch läßt sich das Mikroventil als 2- oder 3-Wegeventil ausbilden; auch kann die Membran in einer Zwischenschicht angeordnet sein.

### Vorteile der Erfindung

Das erfindungsgemäße Mikroventil mit den kennzeichnenden Merkmalen des Anspruchs 1 hat demgegenüber den Vorteil, daß es auf relativ einfache und kostengünstige Weise eine statisch druckausgeglichene Bauart des Mikroventils ermöglicht, bei welcher der Druckausgleich sowohl bei geöffnetem als auch bei geschlossenem Mikroventil voll wirksam ist. Durch diese druckausgeglichene Bauweise lassen sich höhere Drücke steuern bzw. kann mit kleineren Stellkräften gearbeitet werden. Die fluidische Leistung des Mikroventils steigt dadurch beträchtlich, wobei auch eine hohe Dynamik erzielbar ist, da nur relativ kleine Massen zu bewegen sind. Diese druckausgeglichene Bauweise eignet sich besonders zur Herstellung mit mikromechanischen Technologien, so daß neben geringen Stückkosten eine hochgenaue Fertigung und Reproduzierbarkeit der Teile auch bei kleinen Dimensionen möglich ist. Die Bauart des Mikroventils läßt sich optimal auf die Möglichkeiten der verschiedenen mikromechanischen Fertigungstechnologien zuschneiden. Ferner lassen sich derartige Mikroventile beliebig verschalten und auch zu sogenannten Ventilreihen zusammenfügen.

Durch die in den Unteransprüchen aufgeführten Maßnahmen sind vorteilhafte Weiterbildungen und Verbesserungen des im Anspruch 1 angegebenen Mikroventils möglich. Vor allem ermöglichen diese Ausführungen eine relativ einfache und kostengünstige Herstellung, unterschiedliche Bewegungsrichtungen des Schließglieds, wobei das Schließglied sowohl in Strömungsrichtung als auch entgegen Strömungsrichtung öffnen kann sowie verschiedene elektrische Betätigungsarten.

Äußerst günstig ist eine Ausbildung nach Anspruch 3, wodurch ein Druckkraftausgleich zusätzlich zur Zulaufseite auch auf der Ablaufseite erreichbar ist. Vorteilhaft ist ferner eine Ausbildung nach Anspruch 10, die sich besonders gut für beide Durchflußrichtungen eignet; dabei kann gemäß Anspruch 12 ein Antrieb in beiden Richtungen erzielt werden, wodurch Leistung und Dynamik weiter gesteigert werden kann.

### Zeichnung

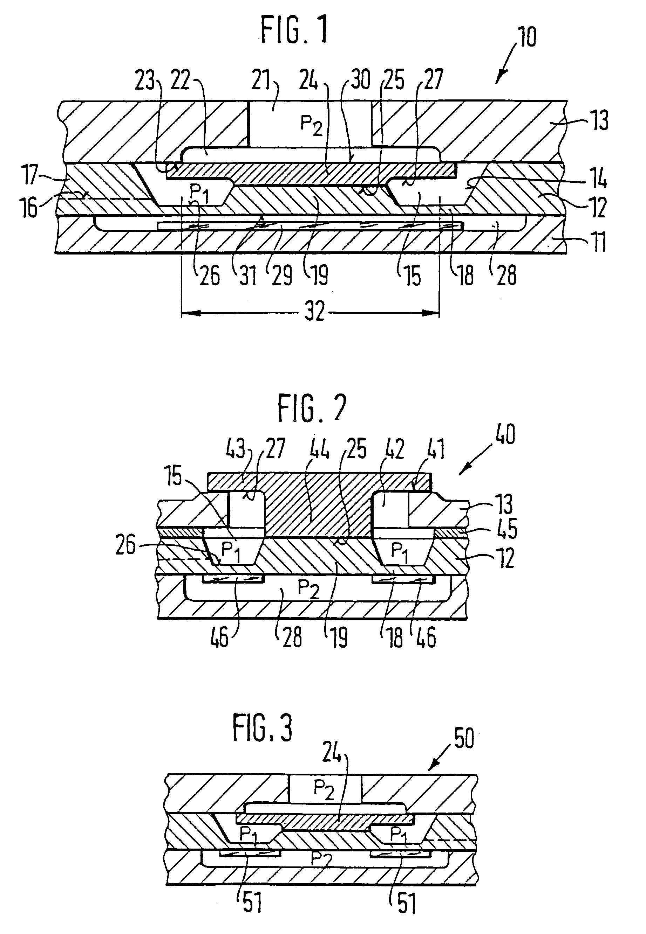

Ausführungsbeispiele der Erfindung sind in der Zeichnung dargestellt und in der nachfolgenden Beschreibung näher erläutert. Es zeigen Figur 1 einen Längsschnitt durch ein Mikroventil in vereinfachter Darstellung und vergrößertem Maßstab und Figur 2 bis 5 ein zweites bis fünftes Ausführungsbeispiel eines Mikroventils.

### Beschreibung der Ausführungsbeispiele

Die Figur 1 zeigt einen Längsschnitt durch ein einzelnes Mikroventil 10 in Mehrschichtenstruktur in stark vergrößerter und vereinfachter Darstellung, wobei die einzelnen Schichten aus unterschiedlichen Materialien aufgebaut sind. Für die Herstellung dieser Mehrschichtenstruktur werden dabei Fertigungstechnologien verwendet, wie sie an sich aus der Halbleitertechnologie bekannt sind, insbesondere unter dem Namen Silizium-Technologie, Dünnschicht-Technologie oder Dickschicht-Technologie. Diese Technologien zur Herstellung von bestimmten dreidimensionalen Formen in einer Mehrschichtenstruktur und deren Möglichkeit, durch Strukturdetails bestimmte mechanische Elemente herauszubilden, wird hierbei als bekannt vorausgesetzt.

Das Mikroventil 10 weist im wesentlichen eine Trägerschicht 11, eine Zwischenschicht 12 sowie eine Deckschicht 13 auf. Dabei ist in der Zwischenschicht 12 durch eine ringnutförmige Vertiefung 14 ein ringförmiger Raum 15 ausgebildet der nach oben hin durch die Deckschicht 13 begrenzt wird und der über einen in der Zwischenschicht 12 verlaufenden Kanal 16 mit einem Zulauf-Anschluß 17 in Verbindung steht. Der relativ dünnwandige Boden der Vertiefung 14 bildet eine federnde Ringmembran 18, die einen demgegenüber dickeren, zentral liegenden Schichtbereich 19 umgibt. Die Ringmembran 18 ist somit in die Zwischenschicht 12 integriert und begrenzt den von der Vertiefung 14 gebildeten Raum 15.

Die Deckschicht 13 weist einen Auslaß-Anschluß 21 auf, der sich nach innenhin zu einer flachen, scheibenförmigen Ausnehmung 22 erweitert. Diese Ausnehmung 22 bildet an der Deckschicht 13 auf der zur Zwischenschicht 12 hin gewandten Seite einen ringförmigen Ventilsitz 23. In der gezeichneten, nicht betätigten Stellung des Mikroventils 10 liegt an diesem Ventilsitz 23 ein tellerförmiges Schließglied 24 an, das mit einer gegenüber dem Durchmesser des Ventilsitzes 23 wesentlich verringerten Fläche 25 am Schichtbereich 19 befestigt ist. Das plattenförmige Schließglied 24 besteht dabei aus einer gegenüber der Zwischenschicht 12 zusätzlichen Schicht aus gleichem oder anderem Material. Dabei sind die Dicken von Schichtbereich 19 und Schließglied 24 so gewählt, daß sie zusammen der Dicke der Zwischenschicht 12 entsprechen.

Bei dieser Bauweise des Mikroventils 10 weist das bewegliche Bauelement aus Ringmembran 18, Schichtbereich 19 und Schließglied 24 eine Druckfläche 26 auf, deren Größe im wesentlichen von der Größe der Ringmembran 18 bestimmt wird. Zugleich ist an diesem beweglichen Bauelement 18, 19, 24 eine in entgegengesetzter Richtung beaufschlagte Druckausgleichsfläche 27 ausgebildet, deren Größe einerseits vom Ventilsitz 23 und andererseits von der Fläche 25 begrenzt wird. Diese beiden Flächen 26 und 27 sind so aufeinander abgestimmt, daß sie im wesentlichen gleich groß sind.

Eine mit dem Rücklaufdruck p2 beaufschlagte Flache 30 auf der Oberseite des plattenförmigen Schließgliedes 24 wird von dem Ventilsitz 23 begrenzt. Eine mit dem Druck p0 beaufschlagte Fläche 31 auf der Unterseite des beweglichen Bauelementes 18, 19, 24 wird vom wirksamen Durchmesser 32 der Ringmembran 18 bestimmt.

Fur einen möglichst vollständigen Druckkraftausgleich am beweglichen Bauelement 18, 19, 24 müssen die Flächen 30 und 31 im wesentlichen gleich groß sein. Dabei wird vorausgesetzt, daß die Drücke p0 unterhalb und p2 oberhalb des beweglichen Bauelementes im wesentlichen gleich groß sind. Die Räume 22 oberhalb und 28 unterhalb des beweglichen Bauelementes 18, 19, 24 müssen jedoch nicht notwendigerweise dasselbe Medium enthalten; Z.B. kann sich im Raum 22 eine Flüssigkeit befinden, während der Raum 28 mit Luft gefüllt ist, wobei in beiden Räumen Umgebungsdruck herrschen kann, so daß p0 im wesentlichen gleich p2 ist.

In der Trägerschicht 11 ist in einer der Zwischenschicht 12 zugewandten flachen Aussparung 28 eine Elektrode 29 angeordnet, die als elektrisches Betätigungsmittel für das Schließglied 24 dient und dazu einen elektrostatisch wirkenden Antrieb bildet.

Die Wirkungsweise des Mikroventils 10 wird wie folgt erläutert: Das von einem nicht näher gezeichneten Zulauf-Anschluß 17 über den Kanal 16 zuströmende Druckmittel gelangt bei nicht betätigtem Mikroventil 10 in den Raum 15, wo sich der Zulaufdruck entsprechend aufbauen kann. Dieser Druck p₁ im Raum 15 wirkt einerseits nach unten auf die Druckfläche 26 an der Membran 18 und gleichzeitig auf die ringförmige Druckausgleichsfläche 27 am Schließglied 24. Da diese beiden Druckflächen 26, 27 im wesentlichen gleich groß ausgebildet sind, ist das bewegliche Bauelement 18, 19, 24 dementsprechend statisch druckausgeglichen. Unter dem Einfluß der Rückstellkraft der federnden Ringmembran 18 liegt das Schließglied 24 dicht am Ventilsitz 23 an und sperrt die Verbindung zum Auslaß-Anschluß 21. Diese Rückstellkraft der Ringmembran 18 kann infolge der druckausgeglichenen Bauweise des Mikroventils 10 sehr klein sein.

Zum Öffnen des Mikroventils 10 wird die Elektrode 29 an Spannung gelegt, wodurch in an sich bekannter Weise ein elektrostatischer Antrieb für das bewegliche Bauelement 19, 24 wirkt und sich das Schließglied 24 nach unten bewegt, wobei es vom Ventilsitz 23 abhebt. Nunmehr kann Druckmittel aus dem Raum 15 zum Auslaß-Anschluß 21 abströmen.

Zum Schließen des Mikroventils 10 wird der elektrostatische Antrieb 29 abgeschaltet, wodurch sich das Schließglied 24 unter dem Einfluß der Rückstellkraft der federnden Ringmembran 18 wieder auf den Ventilsitz 23 legt und damit die Druckmittelverbindung sperrt. Dabei wird unterstellt, daß die Drücke p2 und p0 auf die Flächen 30 bzw. 31 im wesentlichen gleich groß sind und somit auch diesen gegenüber ein Druckkraftausgleich gegeben ist.

Durch die druckausgeglichene Bauweise des Mikroventils 10 ist es möglich, daß nun wesentlich höhere Drücke als bisher gesteuert werden können und daß als elektrische Betätigungsmittel ein relativ schwacher und damit kostengünstiger und platzsparender Antrieb verwendbar ist. Das Mikroventil 10 eignet sich daher zum Steuern wesentlich größerer, hydraulischer oder pneumatischer Leistungen und ermöglicht zudem eine höhere Dynamik. Dabei kann die Druckausgleichsfläche 31 relativ zur Größe der Druckfläche 30 auch so abgestimmt werden, daß nur ein teilweiser Druckausgleich erzielt wird. Auch können die Druckflächen 30, 31 so aufeinander abgestimmt sein, daß neben verbleibenden statischen Druckkräften auch durch die Strömung auftretende, dynamische Kräfte berücksichtigt werden und das Schaltverhalten des Mikroventils 10 beeinflussen.

Die Figur 2 zeigt ein zweites Mikroventil 40, das sich vom Mikroventil 10 nach Figur 1 wie folgt unterscheidet, wobei für gleiche Bauelemente gleiche Bezugszeichen verwendet werden.

Beim zweiten Mikroventil 40 ist der Ventilsitz 41 an der Außenseite der Deckplatte 13 angeordnet, also stromabwärts von der Öffnung 42 in der Deckplatte 13. Das Schließglied 43 weist einen der Fläche 25 entsprechenden bolzenförmigen Abschnitt 44 auf, mit dem es die Öffnung 42 durchdringt und am zentralen Schichtbereich 19 der Zwischenschicht 12 fest verbunden ist. Die Dicke des zentralen Schichtbereichs 19 kann dabei so groß sein wie die Dicke der Zwischenschicht 12. Die Zwischenschicht 12 und die Deckschicht 13 werden ferner durch eine zusätzliche Trennschicht 45 voneinander im Abstand gehalten. Als elektrische Betätigungsmittel für das Schließglied 43 ist an der Ringmembran 18 innerhalb der Aussparung 28 eine ringförmige, piezoelektrische Beschichtung 46 angebracht. Auch beim zweiten Mikroventil 40 sind für einen statischen Druckausgleich am beweglichen Bauelement einerseits die Druckfläche 26 an der Ringmembran 18 und andererseits die Druckausgleichsfläche 27 am Schließglied 43 sowie die Flächen 30 und 31 ausgebildet, wobei sich der druckmittelgefüllte Raum 15 von der Zwischenschicht 12 durch die Trennschicht 45 und die Deckschicht 13 hindurch erstreckt.

Die Wirkungsweise des zweiten Mikroventils 40 entspricht im Prinzip derjenigen des ersten Mikroventils 10, wobei jedoch die Ringmembran 18 durch die piezoelektrische Beschichtung 46 nach oben betätigt wird und somit das Schließglied 43 in Strömungsrichtung geöffnet wird. Wenn bei dieser Ventilbauweise in der Aussparung 28 der gleiche Druck herrscht, wie der Druck im Auslaß, also stromabwärts vom Ventilsitz 41, so ist das bewegliche Bauelement aus Ringmembran 18, Schichtbereich 19 und Schließglied 43 gegenüber den Drücken im Einlaß und auch im Auslaß im wesentlichen druckausgeglichen.

Die Figur 3 zeigt einen Längsschnitt durch ein drittes Mikroventil 50, das sich vom ersten Mikroventil 10 lediglich dadurch unterscheidet, daß als elektrische Betätigungsmittel eine thermoelektrische Beschichtung 51 vorgesehen ist, die innerhalb der Aussparung 28 im Bereich der Ringmembran 18 an der Zwischenschicht 12 angebracht ist. Damit kann das Schließglied 24 in der gleichen Bewegungsrichtung betätigt werden wie beim ersten Mikroventil 10, nämlich aus der gezeichneten Ausgangsstellung nach unten.

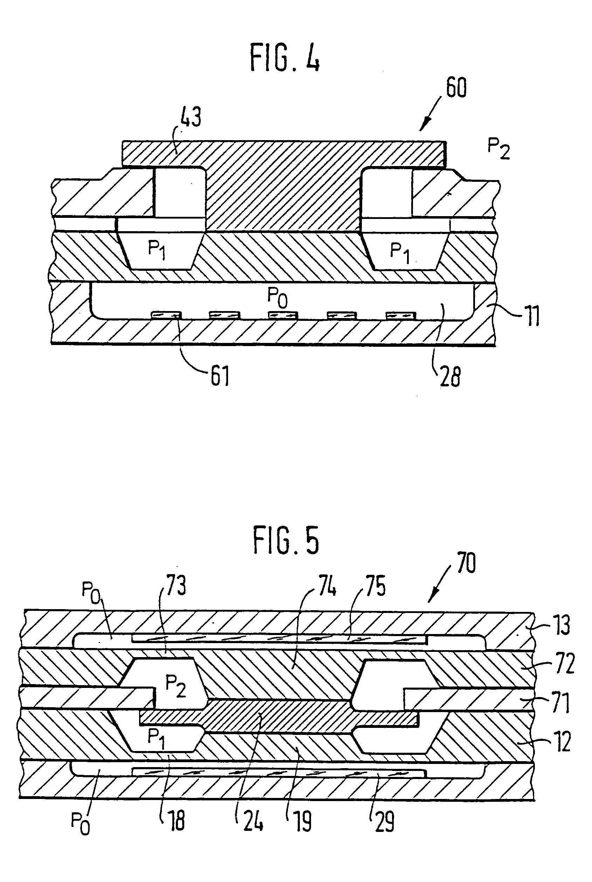

Die Figur 4 zeigt ein viertes Mikroventil 60, das sich von dem in Figur 2 dargestellten zweiten Mikroventil 40 dadurch unterscheidet, daß anstelle der piezoelektrischen Betätigung eine thermofluidische Betätigung vorgesehen ist. Dazu ist in der Aussparung 28 der Trägerschicht 11 ein Heizwiderstand 61 aufgetragen, der sich aufheizt, wenn er von elektrischem Strom durchflossen wird. Dabei erwärmt er das in der Aussparung 28 eingeschlossene Fluid (Flüssigkeit oder Gas), so daß sich dieses ausdehnt. Infolge der dadurch hervorgerufenen Druckerhöhung in der Aussparung 28 wird die Ringmembran 18 nach oben ausgelenkt, und das Schließglied 43 öffnet in Strömungsrichtung.

Die Figur 5 zeigt ein fünftes Mikroventil 70, das sich von dem in Figur 1 dargestellten Mikroventil 10 dadurch unterscheidet, daß sowohl die Ringmembran als auch die elektrische Betätigungseinrichtung doppelt vorhanden sind. Es enthält zwei zusätzliche Zwischenschichten 71 und 72. Das bewegliche Bauelement 19, 24 aus Figur 1 ist über einen weiteren zentralen Schichtbereich 74 mit einer zweiten Ringmembran 73 verbunden, die in der Zwischenschicht 72 ausgebildet ist. Oberhalb des beweglichen Bauelementes 19, 24, 74 ist in der Deckschicht 13 eine weitere elektrische Betätigung 75 vorgesehen, die ebenso aufgebaut ist wie die elektrische Betätigung 29 unterhalb der ersten Ringmembran 18. Dadurch wird ein vollständig symmetrischer Aufbau des Mikroventils 70 erreicht. Insbesondere ist bei diesem Aufbau auch dann ein vollkommener Druckausgleich am beweglichen Bauelement 19, 24, 74 gewährleistet, wenn die Drücke p0 und p2 sich stärker voneinander unterscheiden.

Bei dem Mikroventil 10 wird dagegen vorausgesetzt, daß der mögliche Unterschied von p0 undp2 gering ist, was eventuell nicht bei jedem Anwendungsfall sichergestellt werden kann.

Das oberhalb und unterhalb des beweglichen Bauelementes 19, 24, 74 vorhandene elektrische Betätigungsmittel 75 bzw. 29 hat darüberhinaus den Vorteil, daß das Ventil durch elektrische Betätigung sowohl geöffnet als auch geschlossen werden kann. Bei dem Mikroventil 10 dagegen erfolgt das Schließen durch die federnde Rückstellwirkung der Ringmembran 18.

Selbstverständlich sind an gezeigten Ausführungsformen Änderungen möglich, ohne vom Gedanken der Erfindung abzuweichen.

## Patentansprüche

1. Mikroventil (10, 40, 50, 60, 70) in Mehrschichtenstruktur mit wenigstens zwei Druckmittel-Anschlüssen (17, 21) für Zulauf und Auslaß und einem dazwischen geschalteten Ventilsitz (23, 41), dem ein Schließglied (24, 43) zugeordnet ist, das durch elektrische Betätigungsmittel (29, 46, 51, 61) auslenkbar ist und bei dem wenigstens die Druckmittel-Anschlüsse (17, 21), der Ventilsitz (23, 41) und das Schließglied (24, 43) durch flächige Strukturierung von Materialschichten (11, 12, 13, 24) hergestellt sind und das Schließglied entgegen der elektrischen Betätigungsmittel (29, 46, 51, 61) durch Rückstellmittel (18, 75) bewegbar ist, wobei das Schließglied (24, 43) mit einer Membran (18, 26) fest verbunden ist, die in eine der Schichten (12, 72) integriert ist und die an einen mit Druckmittel beaufschlagbaren Raum (15) grenzt, und mit einer der druckbeaufschlagten Membran (18, 26) entgegenwirkenden Druckausgleichsfläche (27), dadurch gekennzeichnet, daß das Schließglied (24, 43) im wesentlichen tellerförmig ausgebildet ist und mit einer gegenüber dem Ventilsitz (23, 41) wesentlich verringerten Fläche (25) an der Membran (18, 26) befestigt ist, wobei die der Membran (18, 26) gegenüberliegende und die verringerte Fläche (25) radial nach außen bis zum Ventilsitz (23, 41) hin umgebende Ringfläche (27) des tellerförmigen Schließgliedes (24, 43) die Druckausgleichsfläche bildet, die der druckbeaufschlagten Fläche (26) der Membran (18, 26) entgegenwirkt und daß die entgegenwirkenden Flächen (26, 27) im wesentlichen gleich groß sind.

2. Mikroventil nach Anspruch 1, dadurch gekennzeichnet, daß die laterale Ausdehnung des Ventilsitzes (23, 41) annähernd der wirksamen lateralen Ausdehnung (32) der Membran (18) entspricht.

3. Mikroventil nach Anspruch 1 oder 2, dadurch gekennzeichnet, daß die vom Druck in dem nicht mit dem Raum (15) verbundenen, anderen Anschluß (21) beaufschlagte, entgegengesetzt zur Druckausgleichsfläche (27) liegende Fläche (30) am Schließglied (24) wenigstens annähernd gleich groß ist wie die vom Druck in einer Aussparung (28) beaufschlagte, durch die wirksame laterale Ausdehnung der Membran bestimmte Fläche (32) an der Membran (18).

4. Mikroventil nach einem der Ansprüche 1 bis 3, dadurch gekennzeichnet, daß die Membran (18) in einer Zwischenschicht (12) ausgebildet ist, die ihrerseits auf einer Trägerschicht (11) angeordnet ist und daß die Zwischenschicht (12) auf ihrer von der Trägerschicht (11) abgewandten Seite eine Schicht (13, 71), insbesondere Deckschicht (13) aufweist, in der der Ventilsitz (23, 41) ausgebildet ist.

5. Mikroventil nach einem oder mehreren der Ansprüche 1 bis 4, dadurch gekennzeichnet, daß die Membran als federnde Ringmembran (18) ausgeführt ist.

6. Mikroventil nach Anspruch 5, dadurch gekennzeichnet daß die Zwischenschicht (12) zur Bildung der Ringmembran (18) eine ringnutförmige, den Raum (15) mit bildende Vertiefung (14) aufweist und diese Vertiefung (14) einen zentralen, gegenüber der Membran (18) dickeren Schichtbereich (19) umgibt, an dem das eigentliche Schließglied (24) durch ein im wesentlichen tellerförmiges Plättchen (24) ausgebildet ist, das von einer gegenüber der Membran (18) zusätzlichen Schicht gebildet wird.

7. Mikroventil nach einem der Ansprüche 4 bis 6, dadurch gekennzeichnet, daß die Membran (18) und das Schließglied (24) zusammen sich innerhalb der Dicke der Zwischenschicht (12) erstrecken.

8. Mikroventil nach Anspruch 7, dadurch gekennzeichnet, daß der Ventilsitz (23) an der Deckschicht (13) auf deren der Zwischenschicht (12) zugewandten, inneren Seite liegt.

9. Mikroventil nach einem der Ansprüche 4 bis 6, dadurch gekennzeichnet, daß der Ventilsitz (41) an der Außenseite der Deckschicht (13) angeordnet ist und das Schließglied (43, 44) die Deckschicht (13) durchgreift.

10. Mikroventil nach einem der Ansprüche 1 bis 6, dadurch gekennzeichnet, daß das bewegliche Bauelement (18, 24, 73) eine doppelte Ringmembran (18, 73) aufweist (Figur 5).

11. Mikroventil nach Anspruch 10, dadurch gekennzeichnet daß zwischen den die Ringmembranen (18, 73) bildenden Zwischenschichten (12, 72) eine den Ventilsitz (23) tragende Zwischenschicht (71) angeordnet ist und zwischen deren zentralen Schichtbereichen (19, 74) das Schließglied (24) angeordnet ist.

12. Mikroventil nach Anspruch 10 oder 11, dadurch gekennzeichnet, daß die Betätigungsmittel (29, 75) symmetrisch oberhalb und unterhalb des beweglichen Bauelements (18, 24, 73) mit doppelter Ringmembran (18, 73) angeordnet sind.

13. Mikroventil nach einem der Ansprüche 1 bis 12, dadurch gekennzeichnet, daß als Betätigungsmittel an der Membran (18) eine piezoelektrisch (46) oder thermoelektrisch (51) arbeitende Beschichtung angeordnet ist.

14. Mikroventil nach einem der Ansprüche 1 bis 12, dadurch gekennzeichnet, daß als Betätigungsmittel zur elektrostatischen Anziehung der Membran (18) eine Elektrode (29) an der Trägerschicht (11) angeordnet ist.

15. Mikroventil nach einem der Ansprüche 1 bis 12, dadurch gekennzeichnet, daß als Betätigungsmittel zur thermofluidischen Auslenkung der Membran (18) ein Heizwiderstand (61) an der Trägerschicht (11) angeordnet ist.

16. Mikroventil nach einem oder mehreren der Ansprüche 1 bis 15, dadurch gekennzeichnet, daß der Raum (15) mit einem Zulauf-Anschluß (17) verbunden ist.

17. Mikroventil nach einem der Ansprüche 1 bis 16, dadurch gekennzeichnet, daß die Mehrschichtenstruktur in Silizium-Technologie hergestellt ist.

18. Mikroventil nach einem der Ansprüche 1 bis 16, dadurch gekennzeichnet, daß die Mehrschichtenstruktur in Dünnschicht- oder Dickschicht-Technologie hergestellt ist.

19. Mikroventil nach einem der Ansprüche 1 bis 18, gekennzeichnet durch seine Verwendung für Kraftstoff-Einspritzventile oder Servoventile.

## Claims

1. Microvalve (10, 40, 50, 60, 70) with multilayer structure having at least two pressurised-medium connections (17, 21) for inlet and outlet and a valve seat (23, 41) inserted in between with which a closure member (24, 43) is associated which can be deflected by electrical actuating means (29, 46, 51, 61), and in which microvalve at least the pressurised-medium connections (17, 21), the valve seat (23, 41) and the closure member (24, 43) are produced by two-dimensional structuring of material layers (11, 12, 13, 24) and the closure member can be moved in opposition to the electrical actuating means (29, 46, 51, 61) by restoring means (18, 75), the closure member (24, 43) being firmly joined to a membrane (18, 26) which is integrated in one of the layers (12, 72) and which adjoins a space (15) loaded with pressurised-medium and, having a pressure-compensation area (27) acting in opposition to the pressure-loaded membrane (18, 26), characterised in that the closure member (24, 43) is essentially of plate-type construction and is attached to the membrane (18, 26) by means of an area (25) which is substantially reduced compared with the valve seat (23, 41), the annular area (27) of the plate-type closure member (24, 43) which is situated opposite the membrane (18, 26) and surrounds the reduced area (25) radially in an outward direction to the valve seat (23, 41) forming the pressure-compensation area which acts in opposition to the pressure-loaded area (26) of the membrane (18, 26), and in that the oppositely acting areas (26, 27) are essentially equally large.

2. Microvalve according to Claim 1, characterised in that the lateral extension of the valve seat (23, 41) approximately corresponds to the effective lateral extension (32) of the membrane (18).

3. Microvalve according to Claim 1 or 2, characterised in that the area (30) at the closure member (24) loaded by the pressure in the other connection (21) not linked to the space (15) and situated opposite the pressure-compensation area (27) is at least approximately as large as the area (32) at the membrane (18) loaded by the pressure in a recess (28) and determined by the effective lateral extension of the membrane.

4. Microvalve according to one of Claims 1 to 3, characterised in that the membrane (18) is constructed in an intermediate layer (12) which is in turn disposed on a base layer (11), and in that the intermediate layer (12) has, on its side remote from the base layer (11), a layer (13, 71), in particular a covering layer (13), in which the valve seat (23, 41) is constructed.

5. Microvalve according to one or more of Claims 1 to 4, characterised in that the membrane is constructed as a resilient annular membrane (18).

6. Microvalve according to Claim 5, characterised in that, to form the annular membrane (18), the intermediate layer (12) has a recess (14) in the form of an annular groove which also forms the space (15) and said recess (14) surrounds a central layer region (19) which is thicker than the membrane (18) and at which the actual closure member (24) is constructed by an essentially plate-type platelet (24) which is formed by an additional layer with respect to the membrane (18).

7. Microvalve according to one of Claims 4 to 6, characterised in that the membrane (18) and the closure member (24) together extend inside the thickness of the intermediate layer (12).

8. Microvalve according to Claim 7, characterised in that the valve seat (23) at the covering layer (13) rests on the inner side of the latter facing the intermediate layer (12).

9. Microvalve according to one of Claims 4 to 6, characterised in that the valve seat (41) is disposed at the outside of the covering layer (13) and the closure member (43, 44) engages through the covering layer (13).

10. Microvalve according to one of Claims 1 to 6, characterised in that the movable component (18, 24, 73) has a double annular membrane (18, 73) (Figure 5).

11. Microvalve according to Claim 10, characterised in that an intermediate layer (71) carrying the valve seat (23) is disposed between the intermediate layers (12, 72) forming the annular membranes (18, 73) and the closure member (24) is disposed between the central layer regions (19, 74) of the intermediate layers (12, 72).

12. Microvalve according to Claim 10 or 11, characterised in that the actuating means (29, 75) are disposed symmetrically above and below the movable component (18, 24, 73) with double annular membrane (18, 73).

13. Microvalve according to one of Claims 1 to 12, characterised in that a piezoelectrically (46) or thermoelectrically (51) operating coating is disposed as actuating means at the membrane (18).

14. Microvalve according to one of Claims 1 to 12, characterised in that an electrode (29) is disposed at the base layer (11) as actuating means for electrostatically attracting the membrane (18).

15. Microvalve according to one of Claims 1 to 12, characterised in that a heating resistance (61) is disposed at the base layer (11) as actuating means for the thermofluidic deflection of the membrane (18).

16. Microvalve according to one or more of Claims 1 to 15, characterised in that the space (15) is linked to an inlet connection (17).

17. Microvalve according to one of Claims 1 to 16, characterised in that the multilayer structure is produced in silicon technology.

18. Microvalve according to one of Claims 1 to 16, characterised in that the multilayer structure is produced in thin-film or thick-film technology.

19. Microvalve according to one of Claims 1 to 18, characterised by its use for fuel injection valves or servovalves.

## Revendications

1. Micro-soupape (10, 40, 50, 60, 70) dans une structure à couches multiples avec au moins deux raccords de fluide sous pression (17, 21) pour l'arrivée et le départ, et avec un Siège de soupape (23, 41) branché dans l'intervalle, auquel est associé un organe de fermeture (24, 43) qui peut être déployé par un moyen d'actionnement électrique (29, 46, 51, 61), et dans le cas duquel au moins les raccords d'agent sous pression (17, 21), le siège de soupape (23, 41) et l'organe de fermeture (24, 43), sont réalisés au moyen d'une structuration à plat de couches de matière (11, 12, 13, 24), tandis que l'organe de fermeture peut être déplacé à l'encontre du moyen d'actionnement électrique (29, 46, 51, 61) par un moyen de rappel (18, 75), l'organe de fermeture (24, 43) étant relié de façon solidaire à une membrane (18, 26) qui est intégrée dans l'une des couches (12, 72) et qui est adjacente à une chambre pouvant être sollicitée par le fluide sous pression et avec une surface (27) d'équilibrage de pression agissant à l'encontre de la membrane (18, 26) sollicitée par la pression, micro-soupape caractérisée en ce que l'organe de fermeture (24, 43) est constituée sensiblement en forme d'assiette et est fixé sur la membrane (18, 26) par une surface (25) sensiblement réduite par rapport au siège de soupape (23, 41), la surface annulaire (27) de l'organe de fermeture (24, 43) en forme d'assiette, située en regard de la membrane (18, 26) et entourant la surface réduite (25) radialement vers l'extérieur jusqu'au siège de soupape (23, 41), formant la surface d'équilibrage de pression qui agit à l'encontre de la surface (26) de la membrane (18, 26) sollicitée par la pression, et en ce que les surfaces agissant en opposition sont sensiblement aussi grandes l'une que l'autre.

2. Micro-soupape selon la revendication 1, caractérisée en ce que la dimension latérale du siège de soupape (23, 41) correspond à peu près à la dimension latérale opérationnelle (32) de la membrane (18).

3. Micro-soupape selon la revendication 1 ou 2, caractérisée en ce que la surface (30) sollicitée par la pression dans l'autre raccord (21) non relié à la chambre (15), se trouvant opposée à la surface (27) d'équilibrage de pression de l'organe de fermeture (24), est au moins à peu près aussi grande que la surface (32) de la membrane (18) sollicitée par la pression dans un évidement (28), déterminée par la dimension latérale opérationnelle de la membrane.

4. Micro-soupape selon l'une des revendications 1 à 3, caractérisée en ce que la membrane (18) est constituée dans une couche intermédiaire (12), qui de son côté, est disposée sur une couche support (11), et en ce que la couche intermédiaire (12) présente, sur sa face tournée à l'opposé de la couche support (11), une couche (13, 71), en particulier une couche de revêtement (13), dans laquelle est constitué le siège de la soupape (23, 41).

5. Micro-soupape selon l'une des revendications 1 à 4, caractérisée en ce que la membrane est réalisée comme une membrane annulaire élastique (18).

6. Micro-soupape selon la revendication 5, caractérisée en ce que la couche intermédiaire (12) présente, pour former la membrane annulaire (18) un renfoncement (14) en forme de rainure, formant en même temps la chambre (15), et ce renfoncement (14) entoure une zone de couche centrale plus épaisse par rapport à la membrane (18), zone sur laquelle l'organe de fermeture proprement dit (24) est constitué par un petit disque (24) ayant sensiblement la forme d'une assiette, disque qui est constitué par une couche additionnelle par rapport à la membrane (18).

7. Micro-soupape selon l'une des revendications 4 à 6, caractérisée en ce que la membrane (18) et l'organe de fermeture (24) s'étendent ensemble à l'intérieur de l'épaisseur de la couche intermédiaire (12).

8. Micro-soupape selon la revendication 7, caractérisée en ce que le siège de la soupape (23) se trouve sur la couche de revêtement (13) sur sa face intérieure tournée vers la couche intermédiaire (12).

9. Micro-soupape selon l'une des revendications 4 à 6, caractérisée en ce que le siège de soupape (41) est disposé sur le côté extérieur de la couche de revêtement (13), et l'organe de fermeture (43, 44) passe à travers la couche de revêtement (13).

10. Micro-soupape selon l'une des revendications 1 à 6, caractérisée en ce que la composante mobile (18, 24, 73) présente une membrane annulaire (18, 73) en double (figure 5).

11. Micro-soupape selon la revendication 10, caractérisée en ce qu'entre les couches intermédiaires (12, 72) formant les membranes annulaires (18, 73), est disposée une couche intermédiaire (71) qui porte le siège de soupape (23), et entre leurs zones de couche centrale (19, 74) est disposé l'organe de fermeture (24).

12. Micro-soupape selon la revendication 10 ou 11, caractérisée en ce que les moyens d'actionnement (29, 75) sont disposés symétriquement au-dessus et au-dessous du composant mobile (18, 24, 73) avec une membrane annulaire doublée (18, 73).

13. Micro-soupape selon l'une des revendications 1 à 12, caractérisée en ce que l'on dispose comme moyen d'actionnement sur la membrane (18), un revêtement à couche mince fonctionnant de manière piézo-électrique (46) ou thermoélectrique (51).

14. Micro-soupape selon l'une des revendications 1 à 12, caractérisée en ce que l'on dispose comme moyen d'actionnement pour attirer électrostatiquement la membrane (18), une électrode (29) sur la couche support (11).

15. Micro-soupape selon l'une des revendications 1 à 13, caractérisée en ce que l'on dispose comme moyen d'actionnement pour le déplacement thermofluidique de la membrane (18), une résistance chauffante (61) sur la couche support (11).

16. Micro-soupape selon l'une des revendications 1 à 15, caractérisée en ce que la chambre (15) est reliée à un raccord d'arrivée (17).

17. Micro-soupape selon l'une des revendications 1 à 16, caractérisée en ce que la structure à couches multiples est réalisée par la technologie au silicium.

18. Micro-soupape selon l'une des revendications 1 à 16, caractérisée en ce que la structure à couches multiples est fabriquée selon la technologie à couche mince ou à couche épaisse.

19. Micro-soupape selon l'une des revendications 1 à 18, caractérisée par son application aux soupapes d'injection de carburant ou aux servo-soupapes.
